# EUROPÄISCHE PATENTSCHRIFT

(11) **EP 0 969 947 B1**
(45) Veröffentlichungstag und Bekanntmachung des Hinweises auf die Patenterteilung: **25.09.2002**
(21) Anmeldenummer: 99900182.9
(22) Anmeldetag: 08.01.1999
(51) Int. Cl.: B23K 26/14

(54) **BEARBEITUNGSKOPF FÜR EINE LASERGRAVIER- BZW. -SCHNEIDVORRICHTUNG**
PROCESSING HEAD FOR A LASER ENGRAVING OR CUTTING DEVICE
TETE D'USINAGE DESTINEE A UN DISPOSITIF DE GRAVURE OU DE DECOUPE PAR LASER

(30) Priorität: 29.01.1998 AT 14698
(43) Veröffentlichungstag der Anmeldung: 12.01.2000
(73) Patentinhaber: Trodat GmbH, 4600 Wels (AT)
(72) Erfinder: GÜTTLER, Ernst, A-4600 Wels (AT)
(74) Vertreter: Holzer, Walter, Dipl.-Ing.
(86) Internationale Anmeldenummer: AT9900004
(87) Internationale Veröffentlichungsnummer: WO99038643

(56) Entgegenhaltungen:
- EP-A- 0 330 565
- US-A- 4 315 133
- US-A- 4 782 205
- US-A- 5 662 762

## Beschreibung

Die Erfindung betrifft einen Bearbeitungskopf für eine Lasergravier- bzw. -schneidvorrichtung, insbesondere zum Bearbeiten von Stempelplatten, die ein geschlossenes Gehäuse aufweist, in welchem der Bearbeitungskopf mit einem Linsenhalter und mit einer Gasblasdüse relativ zu einer ein Werkstück tragenden Auflage gesteuert bewegbar ist, wobei der Kopf eine mit einer Absaugeinrichtung für Staub verbundene Glocke aufweist, die mit Abstand von der Werkstückoberfläche endet.

Beim Gravieren von Gummi für Textplatten, die in Stempeln verwendet werden, fällt sehr viel Staub an. Wenn dieser Staub im Inneren einer Lasergraviervorrichtung wirbelt, verschmutzt er Linsen und Spiegel, erfordert erhebliche Reinigungsarbeit und setzt auch die Zuverlässigkeit sowie Genauigkeit des mechanischen Systems herab.

Es ist bereits aus der EP 0 330 565 B1 eine Vorrichtung der einleitend angegebenen Art bekannt, bei der um den Laseraustrittskanal herum Düsen symmetrisch und ringförmig so angeordnet sind, daß sie Gas nach innen in Richtung auf den Laserstrahl-Brennpunkt blasen, um den Staub webzublasen. Dabei wird zwar erreicht, daß die Staubpartikel aufgewirbelt und mittels der Absaugglocke entfernt werden, doch ist die Losreißkraft der auftreffenden Gasstrahlen relativ gering.

Eine gute Wirkung bezüglich der Entfernung des beim Lasergravieren erzeugten Staubes erzielt ein im Brennpunkt schräg auftreffender Gasstrahl. Allerdings läßt sich der Staub nicht mehr zuverlässig entfernen, weil die Absaugglocke aus Sicherheitsgründen einen gewissen Abstand von der Werkstückoberfläche haben muß und durch den entstehenden relativ geringen Spalt trotzdem ein beträchtlicher Teil des aufgewirbelten Staubes in den umliegenden Bearbeitungsraum des geschlossenen Gehäuses entweicht und somit ein wesentlicher Teil der Aufgabenstellung nicht erfüllt wird.

Die Erfindung zielt darauf ab, einen Bearbeitungskopf für eine Lasergraviervorrichtung zu schaffen, der diesen Nachteil vermeidet und die Wartungserfordernisse der Lasergraviervorrichtung wesentlich reduziert. Dies wird erfindungsgemäß dadurch erreicht, daß der Bearbeitungskopf mit zumindest zwei Gasblasdüsen ausgestattet ist, von denen die eine Gasblasdüse unter einem Winkel zu dem vertikal auftreffenden Laserstrahl auf die Auftreffstelle desselben gerichtet ist, wogegen die andere, ebenfalls unter einem Winkel zum Laserstrahl geneigte Gasblasdüse auf einen Punkt der Werkstückoberfläche gerichtet ist, der im Abstand von der Auftreffstelle des Laserstrahls liegt.

Auf diese Weise wird erreicht, daß durch entsprechend zugeblasenes Gas, sei es Luft, Inertgas oder ein anderes Gas, der lose Staub unmittelbar während des Graviervorganges aufgewirbelt und durch die mit dem Bearbeitungskopf bzw. Linsenhalter mitgeführte Absaugglocke entfernt wird, so daß er keinesfalls in den umliegenden Bearbeitungsraum gelangen kann.

Die Erfindung beruht auf der Überlegung, daß die unter einem Winkel zur Laserstrahlachse zugeblasene Luft zwar relativ einfach darzustellen, jedoch die Geschwindigkeit der zugeblasenen Luft genau im Auftreffpunkt gering ist, so daß der Staub nur sehr mangelhaft abtransportiert wird. Bei der erfindungsgemäßen Ausbildung wird demgegenüber mit einem schrägen Gasstrahl, der im wesentlichen in Richtung des Brennpunktes zeigt, der dort soeben produzierte Staub aufgewirbelt und fortgeschleudert, und durch den zweiten Strahl, welcher auf einen Punkt zwischen dem Brennpunkt und dem äußeren Rand der Absaugglocke zielt, abgebremst. Durch die Sperrwirkung des zweiten Luftstrahles kann somit der aufgewirbelte Strahl nicht zwischen dem Werkstück und der Absaugglocke entweichen, sondern wird einwandfrei und zur Gänze abgesaugt.

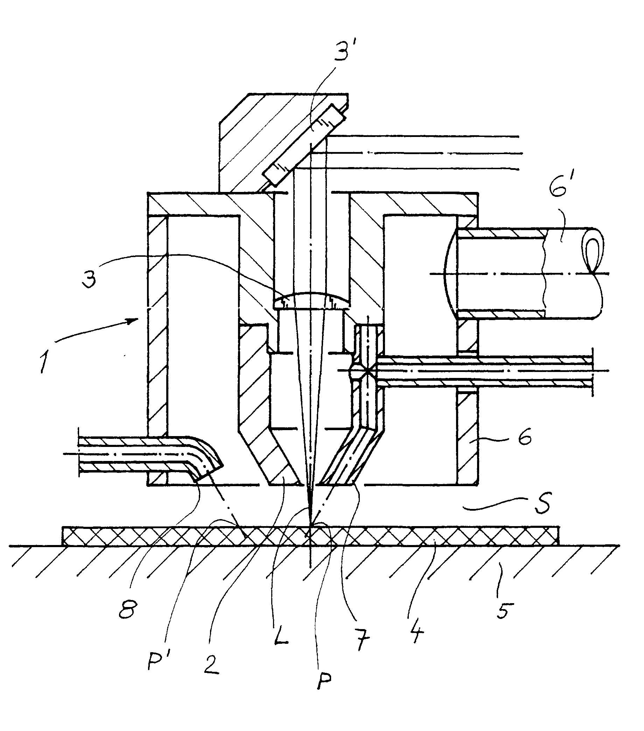

Die Erfindung wird nachfolgend an einem Ausführungsbeispiel unter Bezugnahme auf die Zeichnung näher erläutert, in welcher schematisch der untere Teil eines Laser-Bearbeitungskopfes im Vertikalschnitt dargestellt ist.

Der in einem (nicht gezeigten) geschlossenen Gehäuse gesteuerte bewegbare Laser-Bearbeitungskopf 1, weist einen Halter 2 für eine Linse 3 auf, über welche der von einer (ebenfalls nicht gezeigten) Einrichtung erzeugte Laser-Bearbeitungsstrahl, der über einen Spiegel 3' eintritt, vertikal auf die Oberfläche eines Werkstückes 4 gerichtet wird. Das Werkstuck 4 liegt auf einer Werkstückauflage 5 des Gehäuses. Der Laser-Bearbeitungskopf 1 und die Werkstückauflage 5 können eine gesteuerte Relativbewegung ausführen.

Der Linsenhalter 2 ist von einer Absaugglocke 6 für Staub umgeben, die mit Abstand von der Werkstückoberfläche endet und an eine entsprechende Staubabsaugeinrichtung 6' angeschlossen ist, um den beim Bearbeitungsvorgang erzeugten Staub abzuführen.

Innerhalb der Glocke 6 sind zwei Gasdüsen 7, 8 vorzugsweise unter einem Winkel von 40-80° schräg zum vertikalen Laserstrahl L angeordnet, von dem die eine Düse 7 einen Gasstrahl auf den Auftreffpunkt P des Laserstrahles L richtet, wogegen die andere Düse 8 ihren Gasstrahl auf einen Punkt P' der Werkstückoberfläche richtet, der zwischen dem Auftreffpunkt P des Laserstrahles L und dem Umfangsrand der Absaugglocke 6 liegt.

Die Düsen 7, 8 werden von einem (nicht gezeigten) Gasvorrat mit einem unter Druck stehenden Gas, wie Luft, oder einem Inertgas gespeist. Durch den mit Abstand vom Punkt P bei P' auftreffenden Gasstrahl wird die radiale Ausbreitungsgeschwindigkeit des im Punkt P erzeugten Staubes abgebremst, so daß der Staub den Spalt S zwischen der Glocke 6 und der Werkstückoberfläche nicht durchsetzen kann.

Es versteht sich, daß die Erfindung nicht auf das erläuterte Ausführungsbeispiel beschränkt ist dieses vielmehr im Rahmen des Erfindungsgedankens gemäß dem Ansprüchen abgewandelt werden kann.

## Patentansprüche

1. Bearbeitungskopf (1) für eine Lasergravier- bzw. -schneidvorrichtung, insbesondere zum Bearbeiten von Stempelplatten, die ein geschlossenes Gehäuse aufweist, in welchem der Bearbeitungskopf mit einem Linsenhalter und mit einer Gasblasdüse (8) relativ zu einer ein Werkstück tragenden Auflage bewegbar ist, wobei der Kopf eine mit einer Absaugeinrichtung (6') für Staub verbundene Glocke (6) aufweist, die mit Abstand von der Werkstückoberfläche endet, **dadurch gekennzeichnet, daß** der Bearbeitungskopf (1) mit zumindest zwei Gasblasdüsen (7, 8) ausgestattet ist, von denen die eine Gasblasdüse (7) unter einem Winkel zu dem vertikal auftreffenden Laserstrahl (L) auf die Auftreffstelle (P) desselben gerichtet ist, wogegen die andere, ebenfalls unter einem Winkel zum Laserstrahl (L) geneigte Gasblasdüse (8) auf einen Punkt (P') der Werkstückoberflache gerichtet ist, der im Abstand von der Auftreffstelle (P) des Laserstrahls liegt.

2. Bearbeitungskopf nach Anspruch 1, **dadurch gekennzeichnet, daß** die Düsen (7, 8) unter einem Winkel von 40-80° zur Laserstrahlachse gerichtet sind.

## Claims

1. Machining head (1) for a laser engraving or cutting apparatus, in particular for machining die plates, which comprises a closed housing in which the machining head with a lens holder and with a gas blow nozzle (8) is movable relative to a support carrying a work piece, wherein the head comprises a bell (6) which is connected to an extractor (6') for dust and which ends at a distance from the work piece surface, **characterised in that** the machining head (1) is equipped with at least two gas blow nozzles (7, 8) of which one gas blow nozzle (7) is directed at an angle to the vertically impinging laser beam (L) onto the point of impingement (P) thereof, whereas the other gas blow nozzle (8), which is also inclined at an angle to the laser beam (L), is directed onto a point (P') of the work piece surface which is located at a distance from the point of impingement (P) of the laser beam.

2. Machining head according to claim 1, **characterised in that** the nozzles (7, 8) are directed at an angle of 40-80° to the laser beam axis.

## Revendications

1. Tête d'usinage (1) pour un dispositif de gravure ou de découpe au laser, en particulier pour usiner des cachets, lequel présente un boîtier fermé dans lequel la tête d'usinage est déplaçable avec un porte-lentille et une tuyère à gaz (18) par rapport à un support portant une pièce à oeuvrer, la tête présentant une cloche (6) reliée à un dispositif d'aspiration (6') pour la poussière, laquelle se termine à distance de la surface de la pièce à oeuvrer, **caractérisée en ce que** la tête d'usinage (1) est équipée d'au moins deux tuyères à gaz (7, 8) dont une tuyère à gaz (7), qui se trouve sous un angle par rapport au rayon laser (L) incident à la verticale, est orientée sur le point d'incidence (P) de celui-ci, et l'autre tuyère à gaz (8), qui est également inclinée sous un angle par rapport au rayon laser (L), est au contraire orientée sur un point (P') de la surface de la pièce à oeuvrer qui se trouve à distance du point d'incidence (P).

2. Tête d'usinage selon la revendication 1, **caractérisée en ce que** les tuyères (7, 8) sont orientées sous un angle de 40 à 80° par rapport à l'axe du rayon laser.
